# EUROPEAN PATENT APPLICATION

(11) **EP 3 076 102 A1**
(43) Date of publication of application: **05.10.2016**
(21) Application number: 16163286.4
(22) Date of filing: 31.03.2016
(51) Int. Cl.: F24H 1/52, F24H 1/14, F24H 1/26, F24H 1/24, F28D 1/06, F28D 7/00, F28D 7/10, F28D 21/00, F24H 8/00

(54) **HEAT EXCHANGER AND GAS BOILER USING THE SAME**

(30) Priority: 01.04.2015 CN 201510171309
(71) Applicant: Vaillant GmbH, 42859 Remscheid (DE); Vaillant (Wuxi) Heating Equipment Co., Ltd., Wuxi, Jiangsu 214028 (CN)
(72) Inventor: Liu, Hui, 214142 Wuxi City Jiangsu (CN); Benoit, Sylvain, 44450 Saint Julien de Concelles (FR); Wang, Lei, 214000 Wuxi city Jiangsu (CN)
(74) Representative: Hocker, Thomas

(57) **Abstract**

The present invention discloses a heat exchanger adapted for being used to heat domestic water and water for space heating. The heat exchanger includes a first passageway and a second passage way both disposed in the heat exchanger. The first passageway allows domestic water to pass therethrough and the second passageway allows water for space heating to pass therethrough. Wherein, one of the first and the second passageways is disposed in the other of the first and the second passageways. In this way, the heat exchanger has relatively simple structure and compact size.

## Description

### FIELD OF THE INVENTION

The present invention relates to a heat exchanger, and more particular to a heat exchanger adapted for being used to heat both domestic water and water for space heating.

The present invention also relates to a gas boiler employing the heat exchanger.

### BACKGROUND OF THE INVENTION

Domestic gas boilers can not only be used for space heating purposes but also be used to offer domestic hot water. A typical gas boiler includes a burner, a primary heat exchanger, and a secondary heat exchanger. The burner generates heat by burning combustible gas, and then the heat generated can be absorbed by water circulating in a space heating circuit passing through the primary heat exchanger. The secondary heat exchanger usually takes form of a plate-type heat exchanger, and the hot water for space heating can transfer heat to domestic water when the domestic water passes through the secondary heat exchanger, then the heated domestic water can be extracted through pipes for domestic sanitary use, such as use in the kitchen, laundry, and bath.

An international patent application publication WO 97/45681 discloses a combined heat exchanger which combines a conventional primary heat exchanger and a conventional secondary heat exchanger into one piece, that is, this combined heat exchanger can solely heat both domestic water and space heating water. Compared with traditional twice heating means, employing the combined heat exchanger can reduce heat losses such as space heating water flows between the two heat exchangers, thereby improving heat efficiency. In addition, a gas boiler using this combined heat exchanger can eliminate a conventional secondary heat exchanger and a corresponding three-way valve, which results in a cost reduction of the machine.

Nevertheless, compared with a traditional primary heat exchanger, this combined heat exchanger defines two staggered channels therein for heating domestic water and space heating water respectively, which increases complexity and design difficulty of the heat exchanger. In addition, this new structure increases the size of the heat exchanger, and increases the difficulty of spatial arrangement inside of boilers accordingly.

### SUMMARY OF THE INVENTION

It is an object of present invention to provide a heat exchanger that can be used to heat both domestic water and water for space heating, and the heat exchanger has relatively simple structure and compact size.

It is another object of present invention to provide a gas boiler employing the heat exchanger.

According to one aspect of the present invention there is provided a heat exchanger adapted for being used to heat domestic water and water for space heating. The heat exchanger includes a first passageway and a second passage way both disposed in the heat exchanger. The first passageway allows domestic water to pass therethrough and the second passageway allows water for space heating to pass therethrough. Wherein, one of the first and the second passageways is disposed in the other of the first and the second passageways. Since domestic water and space heating water can exchange heat within a common heat exchanger, a conventional secondary heat exchanger and a corresponding three-way valve can be eliminated, thereby reducing the machine cost. Moreover, compared with existing combined heat exchanger, due to the passageway for domestic water and the passageway for space heating water can be nested with each other, there is no need to change the size or redesign to add an additional passageway with respect to a conventional primary heat exchanger, thus reducing the complexity of the heat exchanger to make it easy to manufacture.

Preferably, the first passageway is disposed in the second passageway.

Preferably, the second passageway is integrally formed in the heat exchanger, and the first passageway is defined by a fluid pipe extending along the second passageway.

Preferably, the heat exchanger is made from aluminum or aluminum alloy, and the fluid pipe defining the first passageway is made from copper or copper alloy.

Preferably, the first passageway has a part of surface contacting with the second passageway. As the first passageway for domestic water is arranged inside of the second passageway for space heating water, and the first passageway has a part of surface contacting with the second passageway, domestic water is able to obtain heat not only from space heating water but also directly from the heat exchanger, which greatly improves the thermal efficiency of heating the domestic water.

Preferably, the contacting surface of the first and the second passageways accounts for at least one quarter of external surface of the first passageway.

Preferably, the contacting surface is in arc shaped.

Preferably, the heat exchanger includes a combustion zone, and both the first passageway and the second passageway encircle the combustion zone.

Preferably, the heat exchanger further includes a condensing zone, and both the first passageway and the second passageway encircle the condensing zone.

According to another aspect of the present invention there is provided a gas boiler including a burner for burning combustible gas and an aforementioned heat exchanger, wherein the burner burns combustible gas to generate heat that is obtained by the heat exchanger to heat domestic water and water for space heating.

### BRIEF DESCRIPTION OF THE DRAWINGS

For a more complete understanding of the present invention, and the advantages thereof, reference is now made to the following descriptions taken in conjunction with the accompanying drawings, in which:
Fig. 1 is a perspective view showing the configuration of a gas boiler in accordance with one embodiment of present invention, wherein some of panels and components are removed to show a heat exchanger and hydraulic connections;
Fig. 2 is a plane view of the heat exchanger shown in Fig. 1;
Fig. 3 is a cross-sectional view taken along line A-A of Fig. 2;
Fig. 4 is a cross-sectional view taken along line B-B of Fig. 3;
Fig. 5 is a perspective view showing a fluid pipe disposed in the heat exchanger of Figs. 3 and 4 for defining a first passageway to be passed by domestic water.

### DETAILED DESCRIPTION OF THE PREFERRED EMBODIMENTS

Reference will now be made to the drawing figures to describe the preferred embodiments of the present invention in detail. However, the embodiments can not be used to restrict the present invention. Changes such as structure, method and function obviously made to those of ordinary skill in the art are also protected by the present invention.

Gas boilers could be fired with combustible gas, such as natural gas, city gas, liquefied petroleum gas, methane, etc., thereby supplying hot water for domestic sanitary usage or heating interior of buildings by burning the combustible gas.

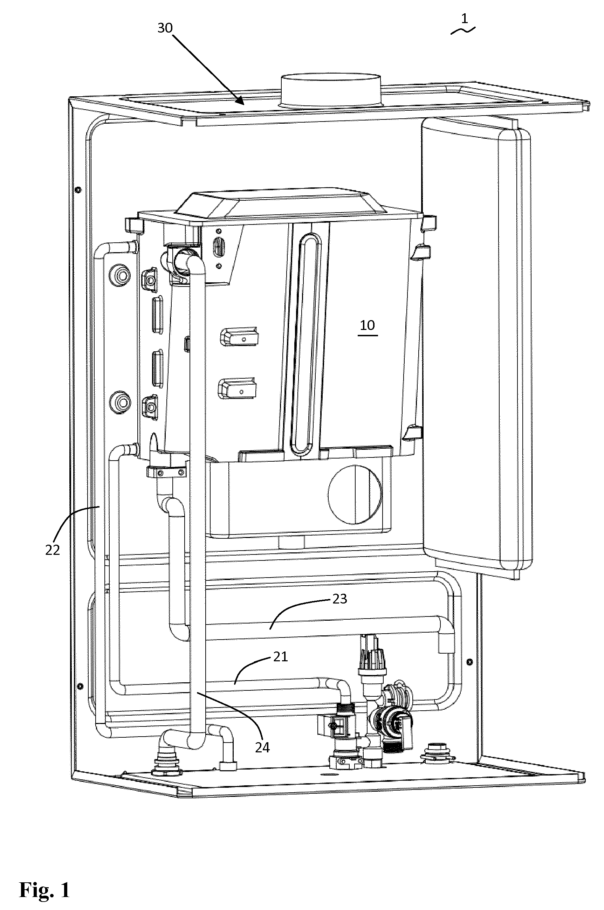

As shown in Fig. 1, a gas boiler 1 in accordance with one embodiment of present invention, includes a housing 30, and a burner (not shown), a heat exchanger 10, an expansion vessel (not labeled), a hydraulic module all contained in the housing 30.

In this embodiment, the housing 30 is generally in cube shaped, and it can be composed of a number of panels. The burner receives gas-air mixture and burns it to generate heat. The expansion vessel is usually provided with a rubber diaphragm therein to separate the interior of the vessel into two parts, namely a gas storage chamber for storage of gas (such as nitrogen) and a liquid storage chamber for storage of liquid (such as space heating water). When the pressure within piping of space heating circuit increases, the increased pressure is exerted onto the flexible rubber diaphragm to deform it, thus the gas within the gas storage chamber is compressed to cause the volume of the chamber to be reduced, thereby the expansion vessel absorbing the increased pressure of space heating water. The hydraulic module usually includes inlet/outlet pipes for domestic water and water circulating in the space heating circuit, valves, and other hydraulic components such as a flow sensor. In present embodiment, an inlet pipe 21 and an outlet pipe 22 are adapted for domestic water, and an inlet pipe 23 and an outlet pipe 24 are adapted for space heating water. These inlet/outlet pipes are all connected to the heat exchanger 10.

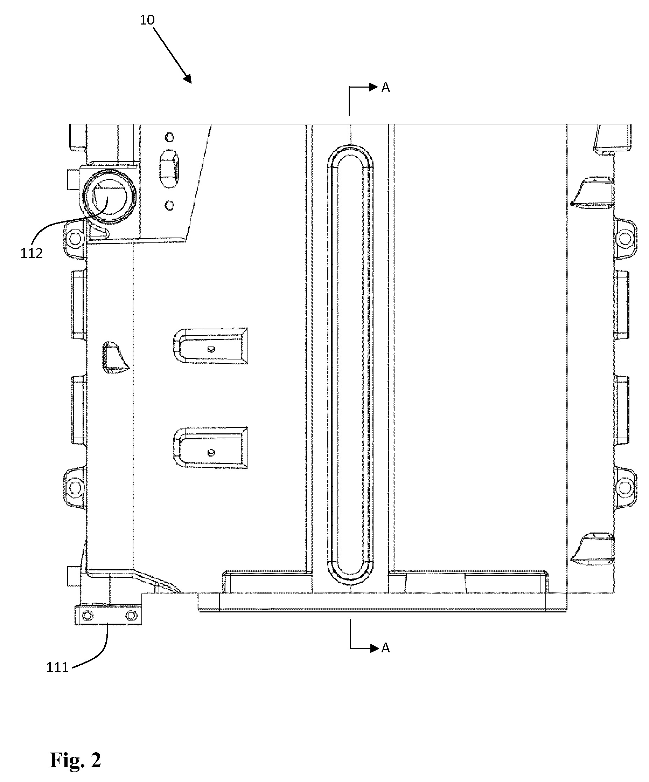

Refer to Figs. 2 to 5, in this embodiment, the heat exchanger is a condensing type heat exchanger, and it is generally in rectangular shaped. The heat exchanger 10 can be cast from aluminum or aluminum alloy, and it includes a combustion zone 101 and a condensing zone 102 located below the combustion zone 101. At the combustion zone, a number of first fins 1011 extending from an inner wall of the heat exchanger 10 and defining a central chamber for burning combustible gas-air mixtures to generate hot flue gas, and the hot flue gas dissipates heat to the first fins 1011. At the condensing zone 102, a number of second fins 1012 projecting from the inner wall of the heat exchanger 10. It should be noted that the number of second fins 1012 has a distribution density greater than that of the number of first fins 1011, that is, the heat exchanger 10 has a larger heat transfer efficiency at the condensing zone 102 than the heat transfer efficiency at the combustion zone 101. The hot flue gas passes through the first fins 1011 and then passes through the second fins 1012, there the flue gas is condensed into water and flows outside of the heat exchanger 10.

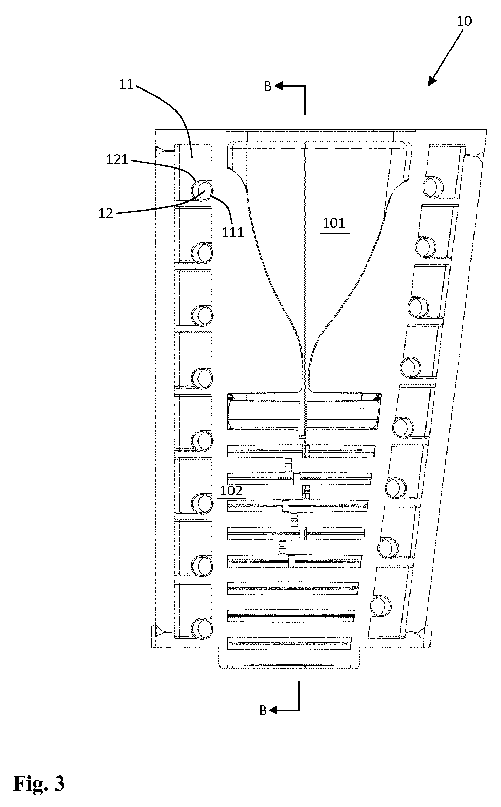

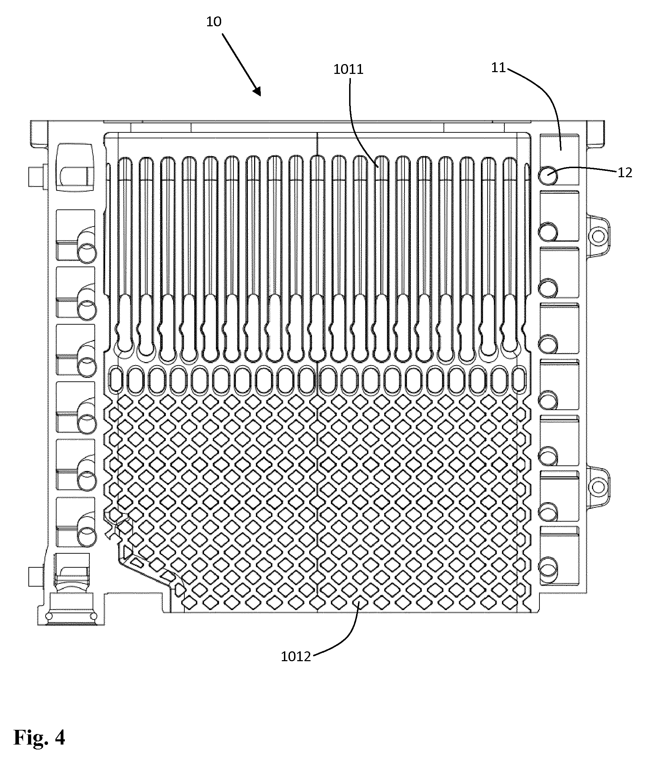

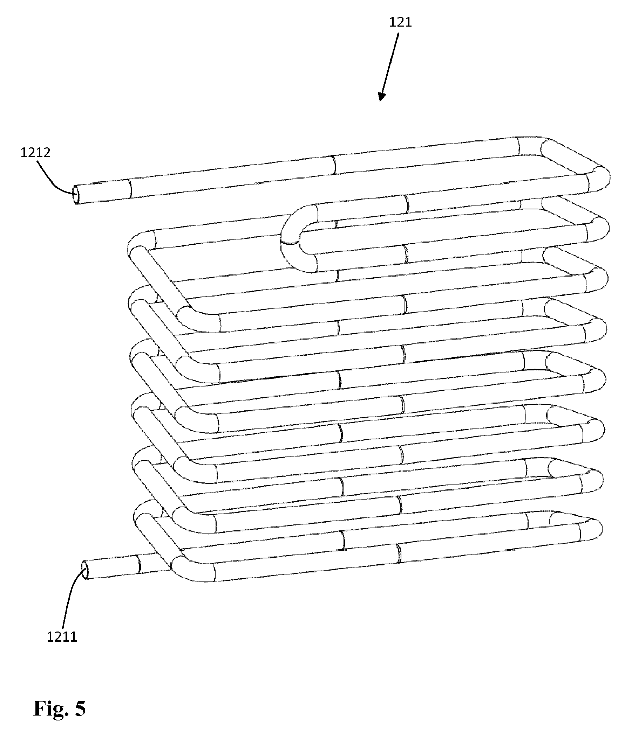

Refer to Figs. 3 and 4, a winding second passageway 11 is integrally formed in the wall of the heat exchanger 10 and encircles the combustion zone 101 and the condensing zone 102. With reference to Fig. 5, a fluid pipe 121 is provided in and extending along the second passageway 11. In a preferred embodiment, the second passageway 11 is used for being passed through by water circulating in the space heating circuit, and the fluid pipe 121 that can be made from copper or copper alloy defines a first passageway 12 therein for being passed through by domestic water. In the preferred embodiment, the first passageway 12 has a part of surface contacting with the second passageway 11, as shown in Fig. 3, the surface labeled by the numeral 111 is the contacting surface. In this way, since the second passage way 12 for space heating water is integrally formed in the heat exchanger 10, the domestic water passing through the first passageway 11 can absorb heat directly from the heat exchanger 10 through the contacting surface 111, and in the meantime, since the first passageway 12 is arranged in the second passageway 11, the domestic water can also obtain heat from space heating water that is flowing in the second passageway 11, therefore, heat efficiency of domestic water is improved greatly. The area of the contracting surface 111 is at least one quarter of the area of external surface of the fluid pipe 121, in other words, the contacting surface of the first and the second passageways 12, 11 accounts for at least one quarter of external surface of the first passageway. In a preferred embodiment, the contacting surface 111 has an area that is around one third of the area of external surface of the fluid pipe 121. In addition, the contacting surface 111 is in arc shaped.

In an alternative embodiment, the second passageway 11 can be defined by a copper pipe disposed in the wall of the heat exchanger 10 with an sectional size which is larger than that of the fluid pipe 121. In this way, the second passageway 11 can allow the domestic water to pass through, and the fluid pipe 121 arranged in the second passageway 11 can allow the space heating water to pass through. In addition, the heat exchanger can also be a non-condensing type, that is, the condensing zone 102 of the heat exchanger can be omitted.

Refer to Figs. 1, 2, and 5, the inlet pipe 21 for domestic water is connected to the fluid pipe 121 at its lower inlet port 1211, and the outlet pipe 22 for domestic water is connected to the fluid pipe 121 at its upper outlet port 1212. The inlet pipe 23 for space heating water is connected to the second passageway 11 at its lower inlet port 111, and the outlet pipe 24 for space heating water is connected to the second passageway 11 at its upper outlet port 112. Since domestic water and space heating water can exchange heat within a common heat exchanger, a conventional secondary heat exchanger and a corresponding three-way valve can be eliminated, thereby reducing the machine cost. Moreover, compared with existing combined heat exchanger, due to the passageway for domestic water and the passageway for space heating water can be nested with each other, there is no need to change the size or redesign to add an additional passageway with respect to a conventional primary heat exchanger, thus reducing the complexity of the heat exchanger to make it easy to manufacture. Furthermore, in the preferred embodiment, as the first passageway for domestic water is arranged inside of the second passageway for space heating water, and the first passageway has a part of surface contacting with the second passageway, domestic water is able to obtain heat not only from space heating water but also directly from the heat exchanger, which greatly improves the thermal efficiency of heating the domestic water.

It is to be understood, however, that even though numerous, characteristics and advantages of the present invention have been set forth in the foregoing description, together with details of the structure and function of the invention, the disclosed is illustrative only, and changes may be made in detail, especially in matters of number, shape, size, and arrangement of parts within the principles of the invention to the full extent indicated by the broadest general meaning of the terms in which the appended claims are expressed.

## Claims

1. A heat exchanger adapted for being used to heat domestic water and water for space heating, comprising a first passageway and a second passage way both disposed in the heat exchanger, said first passageway allowing domestic water to pass therethrough and said second passageway allowing water for space heating to pass therethrough; **characterized in that** one of said first and said second passageways is disposed in the other of said first and said second passageways.

2. A heat exchanger according to claim 1, **characterized in that** the first passageway is disposed in the second passageway.

3. A heat exchanger according to claim 2, **characterized in that** the second passageway is integrally formed in the heat exchanger, and the first passageway is defined by a fluid pipe extending along the second passageway.

4. A heat exchanger according to claim 3, **characterized in that** the heat exchanger is made from aluminum or aluminum alloy, and the fluid pipe defining the first passageway is made from copper or copper alloy.

5. A heat exchanger according to any of the preceding claims, **characterized in that** the first passageway has a part of surface contacting with the second passageway.

6. A heat exchanger according to claim 5, **characterized in that** the contacting surface of the first and the second passageways accounts for at least one quarter of external surface of the first passageway.

7. A heat exchanger according to claim 5, **characterized in that** said contacting surface is in arc shaped.

8. A heat exchanger according to claim 1, **characterized in that** the heat exchanger comprises a combustion zone, and both the first passageway and the second passageway encircle the combustion zone.

9. A heat exchanger according to claim 8, **characterized in that** the heat exchanger further comprises a condensing zone, and both the first passageway and the second passageway encircle the condensing zone.

10. A gas boiler comprising:
a burner for burning combustible gas ; and
a heat exchanger according to any of the preceding claims; wherein
said burner burning combustible gas to generate heat that is obtained by the heat exchanger to heat domestic water and water for space heating.
